# EUROPEAN PATENT APPLICATION

(11) **EP 2 288 131 A1**
(43) Date of publication of application: **23.02.2011**
(21) Application number: 09794518.2
(22) Date of filing: 10.07.2009
(51) Int. Cl.: H04M 3/56, G06F 13/00, H04M 11/00

(54) **NETWORK SYSTEM, COMMUNICATION TERMINAL, COMMUNICATION METHOD, AND COMMUNICATION PROGRAM**

(30) Priority: 11.07.2008 JP 2008181632
(71) Applicant: Sharp Kabushiki Kaisha, Osaka-shi, Osaka 545-8522 (JP)
(72) Inventor: AKABANE, Toshio, Abeno-ku, Osaka-shi, Osaka 545-8522 (JP)
(74) Representative: Treeby, Philip David William
(86) International application number: PCT/JP2009/062582
(87) International publication number: WO 2010/005074

(57) **Abstract**

A first communication terminal (100A) includes a first storage unit (103-1) for storing first and second identification information for identifying first and second communication terminals, respectively, a first generation unit (106A-1) for generating a room name based on the first and second identification information, and a first communication unit (101-1) for transmitting to a server device a request to generate a room for communicating data, and the room name. The first communication unit transmits information indicating an invitation to the room and the first identification information to the second communication terminal (100B) via a network in accordance with the second identification information, and accesses the room corresponding to the room name. The second communication terminal includes a second storage unit (103-2) for storing the second identification information, a second generation unit (106A-2) for generating the room name based on the first and second identification information, and a second communication unit (101-2) receiving the information from the first communication terminal for accessing the room corresponding to the room name.

## Description

### TECHNICAL FIELD

The present invention relates to network systems, communication terminals and communication methods including a plurality of communication terminals mutually connectable on a network and a server device, and particularly to network systems, communication terminals, communication methods and communication programs allowing the communication terminals to communicate data with each other via a room generated in the server device.

### BACKGROUND ART

In a chat system utilizing a conventional IP connection, each communication terminal participating in a chat simultaneously starts a chat application and performs IP connection, and each communication terminal designates a room name of a chat room and thus performs a chat communication. Accordingly, the user of a communication terminal needs to create a room and call a user who is to be a chat partner. In doing so, the user of the communication terminal needs to inform the user who is to be the chat partner of a room name. Furthermore, in order to know mutual states, each communication terminal must start an application and be in a connection state.

Furthermore, a Peer to Peer (P2P) system is known as a direct data (message) communication system using an Internet network between communication terminals connectable to the Internet network. In the P2P system, the user of a communication terminal needs to use a telephone, mail and/or the like or face a user who is to be a partner of communication to directly determine a time scheduled to start P2P communication, and before the time to start P2P communication, each user needs to connect a communication terminal to a network (the Internet), and in that condition, any one or both of the users needs/need to start P2P communication via the communication terminal(s).

Such a cumbersome process in the chat system is resolved for example as disclosed in Japanese Patent Laying-open No. 2004-199134 (patent document 1). More specifically, the document describes that when a chat server establishes a new chat room, it urges one user to input an electronic mail address of another user urged to enter the chat room, or urges one user to select from previously registered user information an electronic mail address of another user urged to enter the chat room, and after the chat room is established, the chat server transmits mail to the electronic mail address to notify the other user that the chat room has been established. When the owner of the chat room and the other user do not have their personal computers interconnected such that they can share the chat room, the user can be informed that the chat room has been established, and the user can actively be urged to enter the chat room to reduce a wasteful waiting time.

Furthermore, Japanese Patent Laying-open No. 2002-278903 (patent document 2) discloses an information processor. More specifically, the document describes that peer to peer communication is done through connection adapted to be established, as follows: for example a personal computer that desires communication transmits electronic mail with the personal computer's IP address attached thereto to a desired destination of communication, e.g., another personal computer, and the other personal computer opens the electronic mail and obtains the IP address attached to the electronic mail.

### PRIOR ART DOCUMENTS

### PATENT DOCUMENTS

Patent Document 1: Japanese Patent Laying-open No. 2004-199134
Patent Document 1: Japanese Patent Laying-open No. 2002-278903

### SUMMARY OF THE INVENTION

### PROBLEMS TO BE SOLVED BY THE INVENTION

In the conventional chat system, however, when the user of a communication terminal generates a new room (chat room), it is necessary to consider a new room name different from the room names of other rooms. Furthermore, the user of the communication terminal needs to inform a user who is a chat partner of the determined room name.

The present invention has been made to overcome such disadvantages, and it contemplates a network system, communication terminal, and communication method allowing the user of a communication terminal to easily generate a new room. MEANS FOR SOLVING THE PROBLEMS

The present invention in one aspect provides a network system including first and second communication terminals and a server device. The first communication terminal includes a first storage unit for storing first and second identification information for identifying the first and second communication terminals, respectively, a first generation unit for generating a room name based on the first and second identification information, and a first communication unit for transmitting to the server device a request to generate a room for communicating data, and the room name. The first communication unit transmits information indicating an invitation to the room and the first identification information to the second communication terminal via a network in accordance with the second identification information, and accesses the room corresponding to the room name. The server device includes a server communication unit for receiving the request and the room name from the first communication terminal, a room generation unit operative in response to the request for generating the room having the room name, and a reception unit for receiving an access to the room from the first and second communication terminals. The second communication terminal includes a second storage unit for storing the second identification information, a second generation unit for generating the room name based on the first and second identification information, and a second communication unit receiving the information from the first communication terminal for accessing the room corresponding to the room name.

The present invention in another aspect provides a communication terminal connectable to another communication terminal and a server device on a network. The communication terminal includes: a storage unit for storing first and second identification information for identifying the communication terminal and the other communication terminal, respectively; a generation unit for generating a room name based on the first and second identification information; and a communication unit for transmitting to the server device a request to generate a room for communicating data, and the room name. The communication unit transmits information indicating an invitation to the room and the first identification information to the other communication terminal via the network in accordance with the second identification information, and accesses the room corresponding to the room name.

The present invention in still another aspect provides a communication terminal connectable to another communication terminal and a server device on a network. The communication terminal includes: a storage unit for storing first identification information for identifying the communication terminal; a communication unit for receiving from the other communication terminal information indicating an invitation to a room for communicating data and second identification information for identifying the other communication terminal; and a generation unit operative in response to the information for generating the room name based on the first and second identification information. The communication unit accesses the room corresponding to the room name.

Preferably, the storage unit stores a plurality of items of identification information for identifying other communication terminals, respectively. The communication terminal further includes a notification unit operative in accordance with a decision on whether the second identification information received from the communication unit is stored in the storage unit, for notifying a user that the invitation to the room has been received. The communication unit operates in response to an operation done by the user corresponding to the notification unit to access the room corresponding to the room name.

The present invention in still another aspect provides a communication method in a communication terminal connectable to another communication terminal and a server device on a network. The communication terminal includes a control unit, a communication unit, and a storage unit for storing first and second identification information for identifying the communication terminal and the other communication terminal, respectively. The method includes the steps of: the control unit generating a room name based on the first and second identification information; the control unit transmitting via the communication unit to the server device a request to generate a room for communicating data, and the room name; the control unit transmitting via the communication unit to the other communication terminal in accordance with the second identification information information indicating an invitation to the room and the first identification information; and the control unit accessing via the communication unit the room corresponding to the room name.

The present invention in still another aspect provides a communication method in a communication terminal connectable to another communication terminal and a server device on a network. The communication terminal includes a control unit, a communication unit, and a storage unit for storing first identification information for identifying the communication terminal. The method includes the steps of: the control unit receiving from the other communication terminal via the communication unit information indicating an invitation to a room for communicating data and second identification information for identifying the other communication terminal; the control unit operating in response to the information to generate a room name based on the first and second identification information; and the control unit accessing via the communication unit the room corresponding to the room name.

The present invention in still another aspect provides a communication program for causing a communication terminal connectable to another communication terminal and a server device on a network to communicate. The communication terminal includes a control unit, a communication unit, and a storage unit for storing first and second identification information for identifying the communication terminal and the other communication terminal, respectively. The communication program causes the control unit to perform the steps of: generating a room name based on the first and second identification information; transmitting via the communication unit to the server device a request to generate a room for communicating data, and the room name; transmitting via the communication unit to the other communication terminal in accordance with the second identification information information indicating an invitation to the room and the first identification information; and accessing via the communication unit the room corresponding to the room name.

The present invention in still another aspect provides a communication program for causing a communication terminal connectable to another communication terminal and a server device on a network to communicate. The communication terminal includes a control unit, a communication unit, and a storage unit for storing first identification information for identifying the communication terminal. The communication program causes the control unit to perform the steps of: receiving from the other communication terminal via the communication unit information indicating an invitation to a room for communicating data and second identification information for identifying the other communication terminal; operating in response to the information to generate the room name based on the first and second identification information; and accessing via the communication unit the room corresponding to the room name.

### EFFECTS OF THE INVENTION

The present network system, communication terminal, and communication method thus allow the user of a communication terminal to easily generate a new room.

### BRIEF DESCRIPTION OF THE DRAWINGS

Fig. 1 is a schematic diagram showing one example of a network system according to the present embodiment.
Fig. 2 is a sequence diagram showing an outline of an operation in the network system.
Fig. 3 represents how a communication terminal provides displaying in a manner transitioning in accordance with the outline of the operation according to the present embodiment.
Fig. 4 generally shows an appearance of a mobile phone according to the present embodiment.
Fig. 5 is a block diagram showing a hardware configuration of the mobile phone according to the present embodiment.
Fig. 6 represents a work memory's data structure and address book data, its terminal's data, its terminal's IP address data, and another terminal's IP address data.
Fig. 7 is a block diagram showing a hardware configuration of a matching server according to the present embodiment.
Fig. 8A is a first representation of a data structure of a room management table.
Fig. 8B is a second representation of the data structure of the room management table.
Fig. 9 is a block diagram showing a functional structure of the network system according to the present embodiment.
Fig. 10 is a flow chart of a procedure of a communication process in the mobile phone according to the present embodiment.
Fig. 11 is a flow chart of a procedure of an incoming call process in the mobile phone according to the present embodiment.
Fig. 12 is a flow chart of a procedure of a mail reception process in the mobile phone according to the present embodiment.
Fig. 13 is a flow chart of a procedure of a first P2P request reception process in the mobile phone according to the present embodiment.
Fig. 14 is a flow chart of a procedure of a second P2P request reception process in the mobile phone according to the present embodiment.
Fig. 15 is a flow chart of a procedure of a sending process in the mobile phone according to the present embodiment.
Fig. 16 is a flow chart of a procedure of an outgoing call process in the mobile phone according to the present embodiment.
Fig. 17 is a flow chart of a procedure of a mail sending process in the mobile phone according to the present embodiment.
Fig. 18 is a flow chart of a procedure of a P2P request sending process in the mobile phone according to the present embodiment.
Fig. 19 is a flow chart of a procedure of a room generation process in the matching server according to the present embodiment.
Fig. 20 is a flow chart of a procedure of the P2P request sending process in the mobile phone according to the present embodiment in an exemplary variation.

### MODES FOR CARRYING OUT THE INVENTION

Hereinafter reference will be made to the drawings to describe the present invention in an embodiment. In the following description, identical components are denoted by identical reference characters. Their names and functions are also identical. Accordingly, they will not be described repeatedly in detail.

Furthermore, hereinafter, a mobile phone 100 will be referred to as a representative example of a "communication terminal". However, the communication terminal may be a personal computer, a car navigation device (a satellite navigation system), a personal navigation device (PND), a personal data assistance (PDA) or other similar information communication devices.

### <General Configuration of Network System 1>

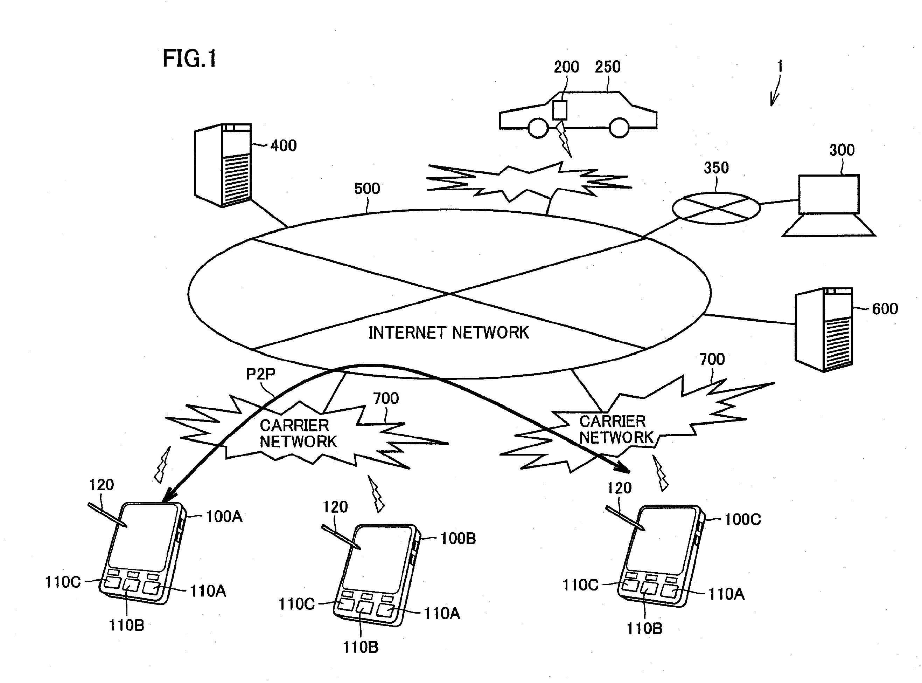

Initially, a network system 1 in a first embodiment will be described. Fig. 1 is a schematic diagram showing one example of network system 1 according to the present embodiment. As shown in Fig. 1, network system 1 includes mobile phones 100A, 100B and 100C, a matching server (a first server device) 400, a mail server (a second server device) 600, an Internet network (a first network) 500, and a carrier network (a second network) 700. Furthermore, network system 1 according to the present embodiment includes a car navigation device 200 mounted in a vehicle 250, and a personal computer (PC) 300.

Note that, to facilitate description, hereinafter, network system 1 according to the present embodiment includes a first mobile phone 100A, a second mobile phone 100B, and a third mobile phone 100C. Furthermore, in describing a configuration, a function or the like common to mobile phones 100A, 100B and 100C, the mobile phones will also collectively be referred to as mobile phone 100. Furthermore, in describing a configuration, a function or the like common to mobile phones 100A, 100B and 100C, car navigation device 200, and personal computer 300, they will also collectively be referred to as a communication terminal.

Mobile phone 100 is configured to be connectable to carrier network 700. Car navigation device 200 is configured to be connectable to Internet network 500. Personal computer 300 is configured to be connectable through a local area network (LAN) 350, a wide area network (WAN) or the like to Internet network 500.
Matching server 400 is configured to be connectable to Internet network 500. Mail server 600 is configured to be connectable to Internet network 500 and carrier network 700.

More specifically, first mobile phone 100A, second mobile phone 100B, third mobile phone 100C, car navigation device 200, and personal computer 300 are interconnectable via carrier network 700, mail server 600, Internet network 500 and/or the like and capable of mutually transmitting and receiving data. Furthermore, mobile phone 100, car navigation device 200, and personal computer 300 are assigned identification information such as a mail address, an Internet protocol (IP) address or the like for identifying their own terminals. In other words, mobile phone 100, car navigation device 200, and personal computer 300 can each store identification information of the other communication terminals in its internal storage medium and communicate data, as based on that identification information, with the other communication terminals via carrier network 700, Internet network 500 and/or the like.

Note that mobile phone 100, car navigation device 200, and personal computer 300 according to the present embodiment use their assigned IP addresses to each communicate data with the other communication terminals without depending on mail server 600. Herein, when each communication terminal accesses matching server 400 i.e., when the communication terminal accesses the Internet, the communication terminal is assigned an IP address by matching server 400 or another server device (not shown) for the sake of illustration. The IP address is assigned in a process known in detail, and accordingly, how the IP address is assigned will not be described in detail.

Furthermore, mobile phone 100, car navigation device 200, and personal computer 300 according to the present embodiment can use their assigned IP addresses to directly, mutually communicate data on a network. That is, network system 1 according to the present embodiment includes mobile phone 100, car navigation device 200, and personal computer 300 capable of configuring a so-called pear-to-pear (P2P) type network.

### <Outline of Operation of Network System 1>

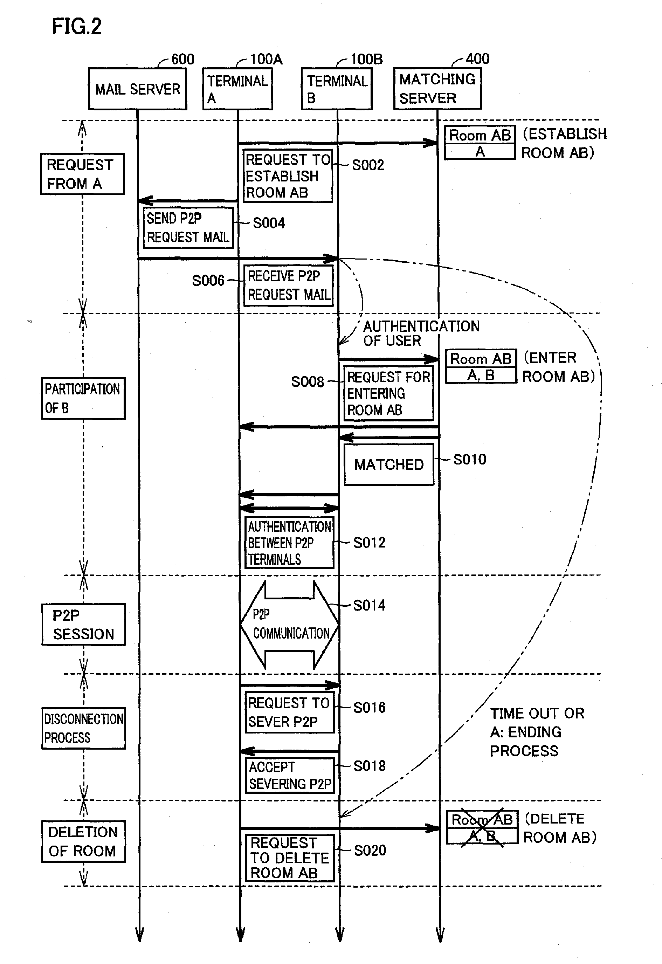

Network system 1 according to the present embodiment generally operates, as will be described hereinafter. Fig. 2 is a sequence diagram showing an outline of an operation in network system 1. As shown in Figs. 1 and 2, the communication terminals according to the present embodiment first need to exchange (or obtain) their IP addresses mutually in order to perform P2P type data communication. Once each communication terminal has obtained an IP address, the communication terminal performs P2P type data communication to transmit a message, an attached file, and/or the like to the other communication terminals.

Hereinafter, however, will be described how each communication terminal communicates a message, an attached file and/or the like through a chat room generated by matching server 400, and also will be described how first mobile phone 100A generates a new chat room and invites second mobile phone 100B to the chat room.

Initially, first mobile phone 100A (indicated in Fig. 2 as a terminal A) requests IP registration (or login) from matching server 400 (Step S002). First mobile phone 100A may obtain an IP address simultaneously, or may obtain it previously. More specifically, first mobile phone 100A transmits to matching server 400 via carrier network 700, mail server 600 and Internet network 500 the mail and IP addresses of first mobile phone 100A, the mail address of second mobile phone 100B, and a request to generate a new chat room.

In response to the request, matching server 400 associates the mail address of first mobile phone 100A with the IP address thereof and thus stores the addresses. Matching server 400 generates a room name based on the mail address of first mobile phone 100A and the mail address of second mobile phone 100B, and generates a chat room with that room name. Matching server 400 may notify first mobile phone 100A that the chat room has been generated. Matching server 400 associates the room name with the current participant communication terminals' IP addresses and thus stores them.

Alternatively, first mobile phone 100A generates a room name, as based on the mail address of first mobile phone 100A and the mail address of second mobile phone 100B, for a new chat room, and transmits that room name to matching server 400. Matching server 400 generates a new chat room based on the room name.

First mobile phone 100A transmits to second mobile phone 100B a P2P participation request mail indicating that the new chat room has been generated, i.e., an invitation to the chat room (Step S004, Step S006). More specifically, first mobile phone 100A transmits the P2P participation request mail to second mobile phone 100B via carrier network 700, mail server 600 and Internet network 500 (Step S004, Step S006).

When second mobile phone 100B receives the P2P participation request mail (Step S006), second mobile phone 100B generates a room name based on the mail address of first mobile phone 100A and the mail address of second mobile phone 100B, and transmits to matching server 400 the mail and IP addresses of second mobile phone 100B and a message indicating that second mobile phone 100B will enter the chat room having the room name (Step S008). First mobile phone 100A may obtain an IP address simultaneously, or may initially obtain an IP address and subsequently access matching server 400.

Matching server 400 receives the message and determines whether the mail address of second mobile phone 100B corresponds to the room name, and then, matching server 400 associates the mail address of second mobile phone 100A with the IP address thereof and stores them. Then, matching server 400 signals to first mobile phone 100A that second mobile phone 100B has entered the chat room, and matching server 400 transmits the IP address of second mobile phone 100B to first mobile phone 100A (Step S010). Simultaneously, matching server 400 signals to second mobile phone 100B that matching server 400 has accepted entrance of second mobile phone 100B into the chat room, and matching server 400 transmits the IP address of first mobile phone 100A to second mobile phone 100B.

First mobile phone 100A and second mobile phone 100B obtain their partners' mail and IP addresses and authenticate each other (Step S012). Once the authentication has been completed, first mobile phone 100A and second mobile phone 100B start P2P communication (Step S014). When first mobile phone 100A transmits to second mobile phone 100B a message indicating that P2P communication is severed (Step S016), second mobile phone 100B transmits to first mobile phone 100A a message indicating that second mobile phone 100B has accepted the request to sever the communication (Step S018). First mobile phone 100A transmits a request to matching server 400 to delete the chat room (Step S020), and matching server 400 deletes the chat room.

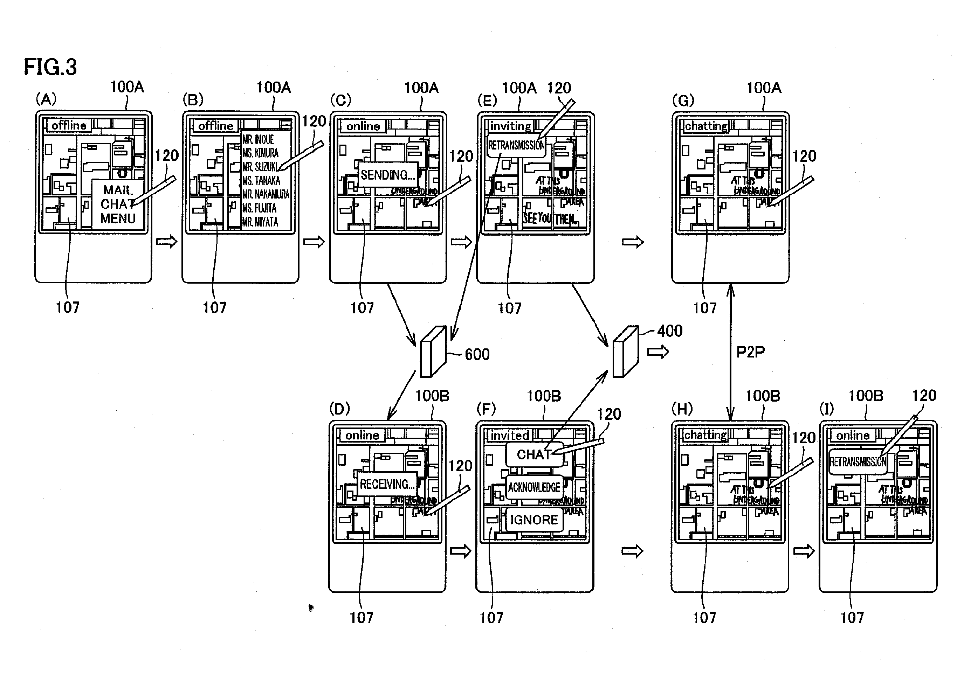

Hereinafter reference will be made to Fig. 2 and Fig. 3 to more specifically describe how network system 1 according to the present embodiment generally operates. Fig. 3 represents how a communication terminal provides displaying in a manner transitioning in accordance with the outline of the operation according to the present embodiment.

As shown in a screen (A) shown in Fig. 3, initially, the user of first mobile phone 100A downloads a map image or the like and is browsing the map image. When the user of first mobile phone 100A desires to have a chat with the user of second mobile phone 100B about the map image, first mobile phone 100A receives an instruction for starting the chat. As shown in a screen (B) shown in Fig. 3, first mobile phone 100A receives an instruction for selecting a user who is to be a chat partner.

As shown in a screen (C) shown in Fig. 3, first mobile phone 100A transmits mail, with the map image as an attached file (or the body of the mail), via mail server 600 to second mobile phone 100B (Step S004). As shown in a screen (D) shown in Fig. 3, second mobile phone 100B receives the mail including the map image (Step S006), and displays the map image.

As shown in a screen (E) shown in Fig. 3, while first mobile phone 100A is not connected to second mobile phone 100B communicatively for P2P, first mobile phone 100A can repeat transmitting the mail. Once the mail has been transmitted, first mobile phone 100A registers its own IP address with matching server 400 and requests matching server 400 to generate a new chat room based on the mail address of first mobile phone 100A and the mail address of second mobile phone 100B (Step S002).

As shown in a screen (F) shown in Fig. 3, second mobile phone 100B receives an instruction to start the chat, and transmits to matching server 400 a room name, a message indicating that second mobile phone 100B enters the chat room, and its own IP address (Step S008). First mobile phone 100A obtains the IP address of second mobile phone 100B and second mobile phone 100B obtains the IP address of first mobile phone 100A (Step S010), and they authenticate each other (Step S012).

Thus, as shown in a screen (G) shown in Fig. 3 and a screen (H) shown in Fig. 3, first mobile phone 100A and second mobile phone 100B can perform P2P communication (Step S014). If first mobile phone 100A severs the P2P communication (Step S016, Step S018), second mobile phone 100B can transmit mail to first mobile phone 100A or the like, as shown in a screen (I) shown in Fig. 3.

Such function is implemented in a configuration, as will be described hereinafter.

### <Hardware Configuration of Mobile Phone 100>

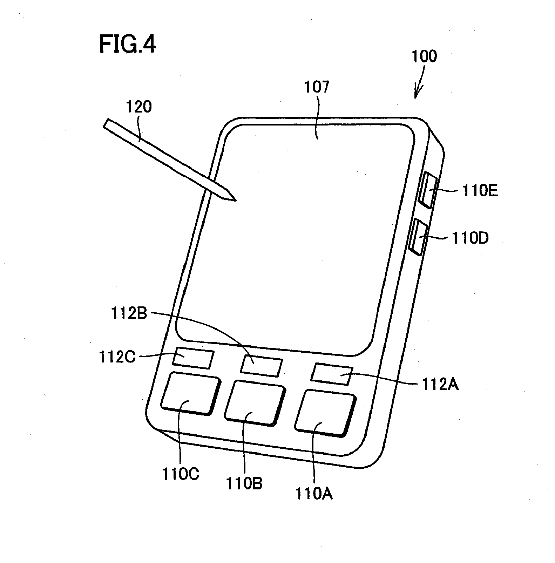

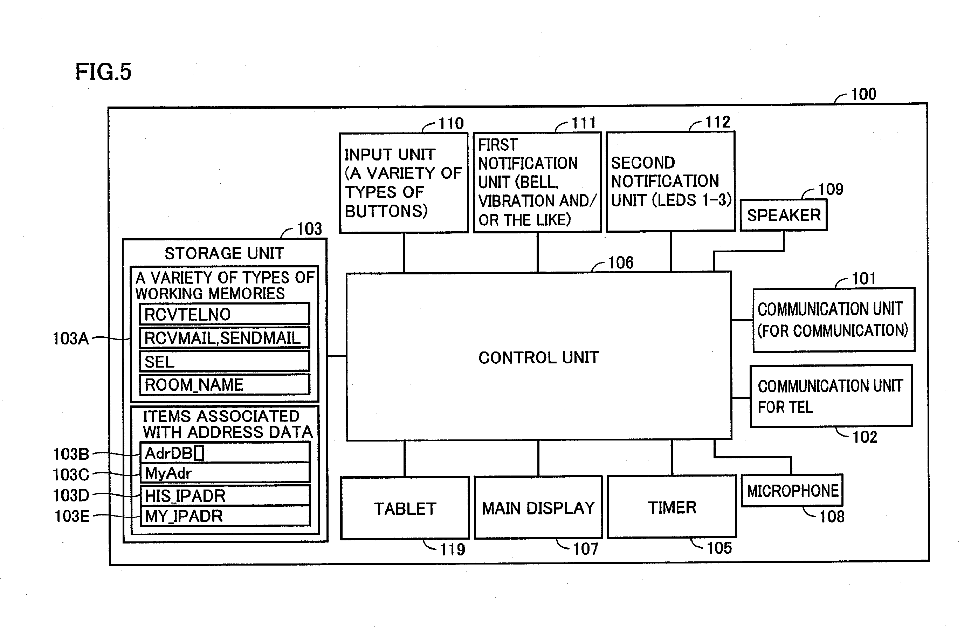

Mobile phone 100 according to the present embodiment has a hardware configuration, as will be described hereinafter. Fig. 4 generally shows an appearance of mobile phone 100 according to the present embodiment. Fig. 5 is a block diagram showing a hardware configuration of mobile phone 100 according to the present embodiment.

As shown in Figs. 4 and 5, mobile phone 100 according to the present embodiment includes a communication unit 101 communicating data with an external network, a communication unit 102 for TEL, a storage unit 103 storing a program and a variety of types of databases, a control unit 106, a main display 107, a microphone 108 receiving external sound, a speaker 109 outputting sound, an input unit 110 receiving a variety of types of information input, a first notification unit 111 outputting audible notification indicating that externally communicated data, a call signal and/or the like have/has been received, and a second notification unit 112 displaying notification indicating that externally communicated data, a call signal and/or the like have/has been received.

Main display 107 according to the present embodiment is a touch panel configured of a liquid crystal panel, a CRT or the like. Mobile phone 100 according to the present embodiment is provided with a pen tablet 119 under (or at a back side of) main display 107. This allows a user to use a stylus pen 120 or the like to handwrite and thus input graphical information or the like through pen tablet 119 to control unit 106. Main display 107 displays an image, a text and/or the like based on data output by control unit 106.

Input unit 110 receives information from a user for example operating a key for input. For example, input unit 110 includes a TEL button 110A for receiving a telephone call or making a telephone call, a mail button 110B for receiving mail or sending mail, a P2P button 110C for receiving P2P communication or sending P2P communication, an address book button 110D used to access address book data, and an end button 110E for terminating a variety of types of processes. That is, when P2P participation request mail is received via communication unit 102 for TEL, input unit 110 selectably receives instructions input by a user to enter a chat room, display the mail's content(s), and the like.

First notification unit 111 outputs a ringer tone through speaker 109 or the like. Alternatively, first notification unit 111 has a vibration function. When an incoming call, mail, P2P participation request mail and/or the like are/is received, first notification unit 111 outputs sound, vibrates mobile phone 100, and/or the like.

Second notification unit 112 includes a light emitting diode (LED) 112A for TEL, an LED 112B for mail, and an LED 112C for P2P. LED 112A for TEL flashes on/off when a call is received. LED 112B for mail flashes on/off when mail is received. LED 112C for P2P flashes on/off when P2P communication is received.

Control unit 106 is implemented for example as a central processing unit (CPU) or the like and controls each component of mobile phone 100. For example, control unit 106 receives a variety of types of instructions from a user via input unit 110, and communicates data with an external communication terminal via communication unit 101, communication unit 102 for TEL, a network and/or the like.

Communication unit 101 and communication unit 102 for TEL receive data to be communicated from control unit 106 and convert the data to a communication signal, and send the signal from an antenna (not shown). Communication unit 101 and communication unit 102 for TEL receive a communication signal through the antenna and convert the signal to communicated data, and input the data to control unit 106.

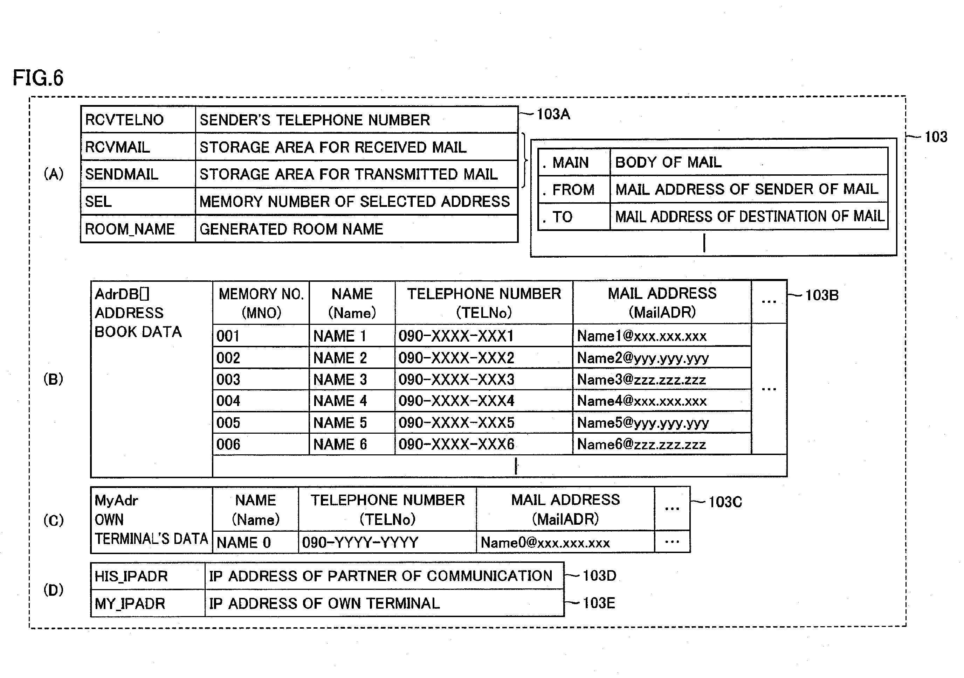

Storage unit 103 is implemented as: random access memory (RAM) functioning as working memory; read only memory (ROM) storing a control program or the like; a hard disk storing image data or the like; and the like. Fig. 6(A) represents a data structure of a variety of types of work memory 103A configuring storage unit 103. Fig. 6(B) represents address book data 103B stored in storage unit 103. Fig. 6(C) represents data 103C of the terminal of interest stored in storage unit 103. Fig. 6(D) represents IP address data 103D and IP address data 103E of the terminal of interest and another terminal, respectively, stored in storage unit 103.

As shown in Fig. 6(A), the storage unit 103 work memory 103A includes a RCVTELNO area storing an originator's telephone number, a RCVMAIL area storing information on received mail, a SENDMAIL area storing information on sent mail, an SEL area storing the memory number of an address selected, and a ROOMNAME area storing a room name generated. Note that the information on received mail includes the body of mail stored in a MAIN area, and a mail address of a sender of mail stored in the RCVMAIL area at a FROM area. The information on sent mail includes the body of mail stored in the MAIN area, and a mail address of a destination of mail stored in the RCVMAIL area at a TO area.

As shown in Fig. 6(B), address book data 103B associates a memory number for each destination (or each other communication terminal). Address book data 103B associates a name, a telephone number, a mail address, and the like with one another for each destination, and thus stores them.

As shown in Fig. 6(C), data 103C for the terminal of interest stores the name of the user of the terminal of interest, the telephone number of the terminal of interest, the mail address of the terminal of interest, and the like.

As shown in Fig. 6(D), IP address data 103D of the terminal of interest stores the IP address of the terminal of interest. IP address data 103E of another terminal stores the IP address of the other terminal.

### <Hardware Configuration of Matching Server 400 and Mail Server 600>

The present embodiment provides matching server 400 and mail server 600 having a hardware configuration, as will be described hereinafter. Note that mail server 600 has a hardware configuration similar to that of matching server 400, and accordingly it will not be described repeatedly.

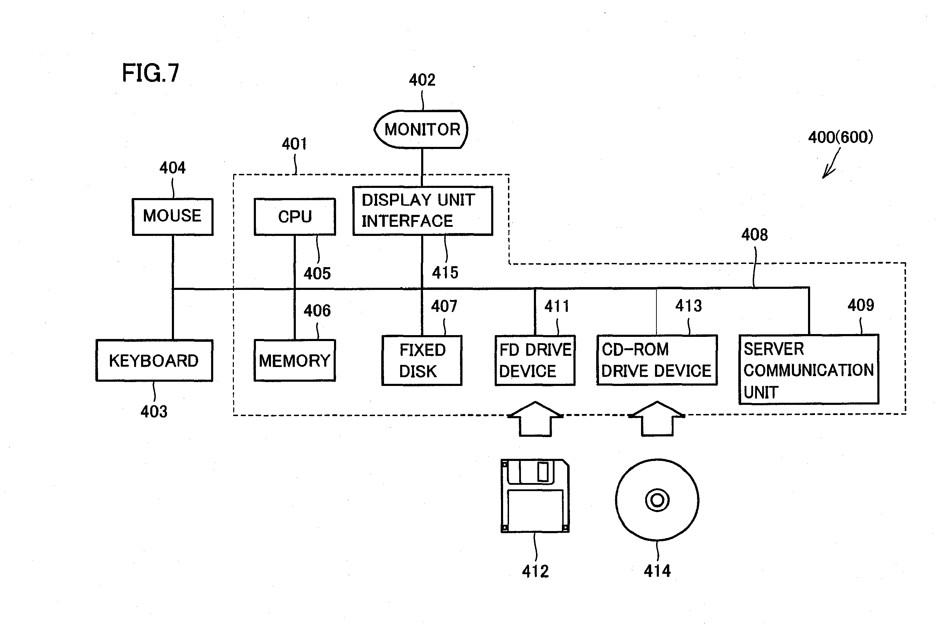

Fig. 7 is a block diagram showing a hardware configuration of matching server 400 according to the present embodiment. As shown in Fig. 7, matching server 400 according to the present embodiment includes a CPU 405, a memory 406, a fixed disk 407, and a server communication unit 409 interconnected by an internal bus 408.

Memory 406 stores a variety of types of information, and for example temporarily stores data required for execution of a program in CPU 405. Fixed disk 407 stores a program executed by CPU 105, a database, and the like. CPU 405, which controls each element of matching server 400 and mail server 600, is a device performing a variety of types of operations.

Server communication unit 409 receives data output from CPU 405, converts the data to an electrical signal, and externally transmits the signal. Server communication unit 409 also converts an externally received electrical signal to data and inputs the data to CPU 405. More specifically, server communication unit 409 receives data from CPU 405 and transmits the data on Internet network 500, carrier network 700, and/or the like to mobile phone 100, car navigation device 200, personal computer 300 and/or the like. Server communication unit 409 also receives data via Internet network 500, carrier network 700 and/or the like from mobile phone 100, car navigation device 200, personal computer 300 and/or the like and inputs the data to CPU 405.

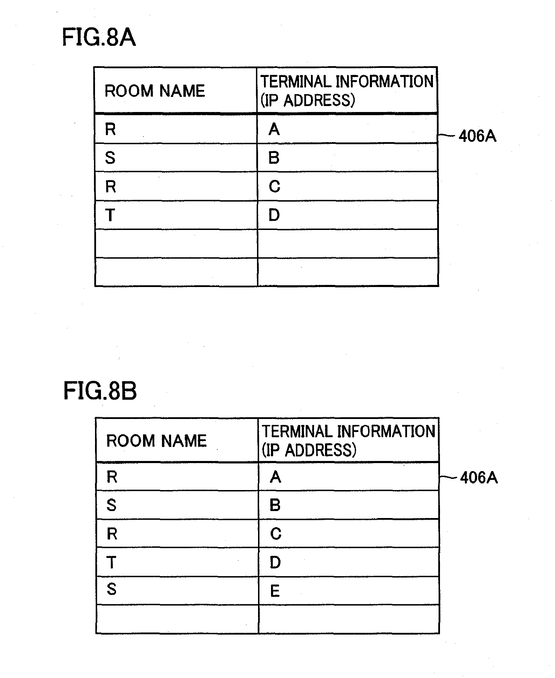

What data memory 406 or fixed disk 407 has stored therein will be described hereinafter. Fig. 8A is a first representation of a data structure of a room management table 406A stored in matching server 400 at memory 406 or fixed disk 407. Fig. 8B is a second representation of the data structure of room management table 406A stored in matching server 400 at memory 406 or fixed disk 407.

As shown in Fig. 8A and Fig. 8B, room management table 406A associates a room name with an IP address and thus stores them. For example, at a point in time, as shown in Fig. 8A, chat rooms having room names R, S and T, respectively, are generated in matching server 400. In the chat room with the room name R are a communication terminal having an IP address A and a communication terminal having an IP address C. In the chat room with the room name S is a communication terminal having an IP address B. In the chat room with the room name T is a communication terminal having an IP address D.

As will be described hereinafter, the room name R is determined by CPU 406 from a mail address of the communication terminal having the IP address A and a mail address of the communication terminal having the IP address B. In the Fig. 8A state, if a communication terminal having an IP address E newly enters the chat room with the room name S, then, as shown in Fig. 8B, room management table 406A associates the room name S with the IP address E and thus stores them.

More specifically, when matching server 400 receives a request from first mobile phone 100A to generate a new chat room (as indicated in Fig. 2 at Step S002), CPU 405 generates a room name based on the mail address of first mobile phone 100A and the mail address of second mobile phone 100B, and then stores that room name in room management table 406A in association with the IP address of first mobile phone 100A.

Then, when second mobile phone 100B requests matching server 400 to allow second mobile phone 100B to enter a chat room (as indicated in Fig. 2 at Step S008), CPU 405 associates that room name with the IP address of second mobile phone 100B and thus stores them in room management table 406A. CPU 406 reads from room management table 406A the IP address of first mobile phone 100A associated with that room name. CPU 406 transmits the IP address of first mobile phone 100A to each second communication terminal, and transmits the IP address of second mobile phone 100B to first mobile phone 100A.

### < Functional Configuration of Network System 1>

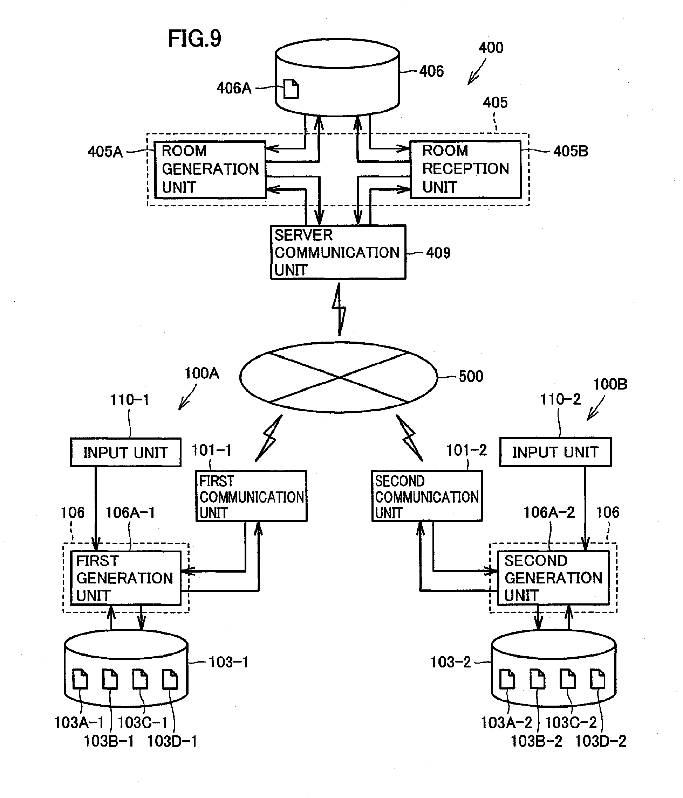

Fig. 9 is a block diagram showing a functional configuration of network system 1 according to the present embodiment. As shown in Fig. 9, network system 1 according to the present embodiment includes first mobile phone 100A, second mobile phone 100B, Internet network 500, and matching server 400.

First mobile phone 100A includes a first communication unit 101-1, a first generation unit 106A-1, a first storage unit 103-1, and a first input unit 110-1. Second mobile phone 100B includes a second communication unit 101-2, a second generation unit 106A-2, a second storage unit 103-2, and a second input unit 110-2. Matching server 400 includes server communication unit 409, a room generation unit 405A, a reception unit 405B, and memory 406.

First communication unit 101-1 is implemented as communication unit 101 of first mobile phone 100A. First storage unit 103-1 is implemented as storage unit 103 of first mobile phone 100A. First input unit 110-1 is implemented as input unit 110 of first mobile phone 100A. First generation unit 106A-1 is a function exhibited by the first mobile phone 100A control unit 106 executing a program stored in storage unit 103 to control each hardware shown in Fig. 5.

Second communication unit 101-2 is implemented as communication unit 101 of second mobile phone 100B. Second storage unit 103-2 is implemented as storage unit 103 of second mobile phone 100B. Second input unit 110-2 is implemented as input unit 110 of second mobile phone 100B. Second generation unit 106A-2 is a function exhibited by the second mobile phone 100B control unit 106 executing a program stored in storage unit 103 to control each hardware shown in Fig. 5.

Room generation unit 405A and reception unit 405B are functions exhibited by the matching server 400 CPU 405 executing a program stored in memory 406, fixed disk 407, and/or the like to control each hardware shown in Fig. 7. For example, each function of CPU 405 is implemented by CPU 405 once reading a program that is stored in fixed disk 407 into memory 406, and reading that program from memory 406, while sequentially executing the program.

First storage unit 103-1 stores a mail address (or first identification information) for identifying first mobile phone 100A, and a mail address (or second identification information) for identifying second mobile phone 100B.

First generation unit 106A-1 generates a new room name based on the mail address of first mobile phone 100A and the mail address of second mobile phone 100B.

First communication unit 101-1 transmits to matching server 400 the mail address of first mobile phone 100A, the mail address of second mobile phone 100B, and a request to generate a new chat room. First communication unit 101-1 transmits a first message to second mobile phone 100B in accordance with the mail address of second mobile phone 100B via Internet network 500 or carrier network 700. The first message indicates the mail address of first mobile phone 100A and that the new chat room is generated. First communication unit 101-1 accesses the new chat room generated in matching server 400, as based on the new room name. Furthermore, first communication unit 101-1 accesses a second room in response to an instruction issued to perform P2P communication or an instruction issued to enter a chat room.

More specifically, control unit 106 causes communication unit 101 to transmit to matching server 400 the mail address of first mobile phone 100A, the mail address of second mobile phone 100B, and a request to generate a new chat room. Control unit 106 causes communication unit 101 to transmit the first message to second mobile phone 100B in accordance with the mail address of second mobile phone 100B. The first message indicates the mail address of first mobile phone 100A and that the new chat room has been generated. Control unit 106 causes communication unit 101 to access the new chat room that has been generated in matching server 400, as based on the new room name. Furthermore, control unit 106 receives an instruction issued to perform P2P communication or an instruction issued to enter a chat room, and causes communication unit 101 to access a second room.

Server communication unit 409 receives from first mobile phone 100A the mail address of first mobile phone 100A, the mail address of second mobile phone 100B, and a request to generate a new chat room.

In response to the request, room generation unit 405A generates a new room name based on the mail address of first mobile phone 100A and the mail address of second mobile phone 100B, and room generation unit 405A generates a new chat room having the new room name.

Reception unit 405B receives access from first mobile phone 100A to the chat room, referring to the mail address (or IP address) of first mobile phone 100A. Reception unit 405B receives access from the second mobile phone 100B to the chat room, referring to the mail address (or IP address) of second mobile phone 100B.

Note, however, that first communication unit 101-1 may transmit a new room name to matching server 400. In that case, room generation unit 405A does not need to generate a new room name. On the contrary, when room generation unit 405A is in charge of generating room names, matching server 400 may transmit a room name of a newly generated chat room to first mobile phone 100A or second mobile phone 100B.

Second storage unit 103-2 stores a mail address for identifying second mobile phone 100B.

Second communication unit 101-2 receives from first mobile phone 100A a message indicating the mail address for identifying first mobile phone 100A and that a chat room has been generated.

In response to the message, second generation unit 106A-2 generates a room name based on the mail address of first mobile phone 100A and the mail address of second mobile phone 100B.

Second communication unit 101-2 accesses the chat room based on the room name.

First mobile phone 100A may have not only a function that invites a partner to a chat room but also a function allowing first mobile phone 100A to be invited to a chat room like second mobile phone 100B. On the contrary, second mobile phone 100B may have not only a function allowing second mobile phone 100B to be invited to a chat room but also a function that invites a partner to a chat room like first mobile phone 100A.

That is, first communication unit 101-1 receives from second mobile phone 100B a message indicating the mail address of second mobile phone 100B and that a new room has been generated. In response to the message, first generation unit 106A-1 generates a new room name based on the mail address of second mobile phone 100B and the mail address of first mobile phone 100A. First communication unit 101-1 accesses the chat room based on the new room name.

### (Generating a Room Name)

First generation unit 106A-1, second generation unit 106A-2 and room generation unit 405A operate to generate a room name in a method, as will be described hereinafter.

For example, first generation unit 106A-1 generates a room name constituted of a first mail address of first mobile phone 100A inviting another communication terminal to a chat room and a second mail address of second mobile phone 100B invited by another communication terminal to the chat room, that are simply aligned. Since a mail address is data unique to a terminal, the room name constituted of the aligned first and second mail addresses is data unique to a group and does not overlap other groups' room names.

Alternatively, first generation unit 106A-1 may generate a room name constituted of the first mail address of first mobile phone 100A inviting another communication terminal to a chat room and the second mail address of second mobile phone 100B invited by another communication terminal to the chat room, that are arranged in alphabetical order.

Furthermore, first generation unit 106A-1 may use a hash function or the like to encrypt and then align the first mail address and the second mail address to generate a room name. Network system 1 according to the present embodiment does not require restoring original data. Accordingly, the mail addresses are encrypted preferably in a method that allows the original data to be less readily restored. For example, it is preferable to encrypt the mail addresses by an irreversible function.

In network system 1 according to the present embodiment, second generation unit 106A-2 and room generation unit 405A generate a room name by a method similar to that used for first generation unit 106A-1. Thus, second mobile phone 100B invited and matching server 400 can generate a room name for themselves. That is, the user of first mobile phone 100A does not need to notify the user of second mobile phone 100B of a room name before starting P2P communication.

Furthermore, first generation unit 106A-1 and second generation unit 106A-2 may generate a room name by arranging the first mail address and the second mail address in a different order. In that case, the matching server 400 reception unit 405B is only required to compare a room name corresponding to each of how mail addresses are arranged with a room name sent from each of first mobile phone 100A and second mobile phone 100B.

Thus the present embodiment provides network system 1 allowing each communication terminal to generate a room name which does not overlap that of another chat room. This liberates the user of each communication terminal from the burden of creating a room name which does not overlap that of the other chat room. Furthermore, in general, a mail address is identification information that can identify a communication terminal. As such, it includes a relatively large number of characters, and it is cumbersome for a user to input for each chat room a room name including the first mail address and the second mail address. Network system 1 according to the present embodiment can also save the user's such time and effort.

### <Communication Process in Mobile Phone 100>

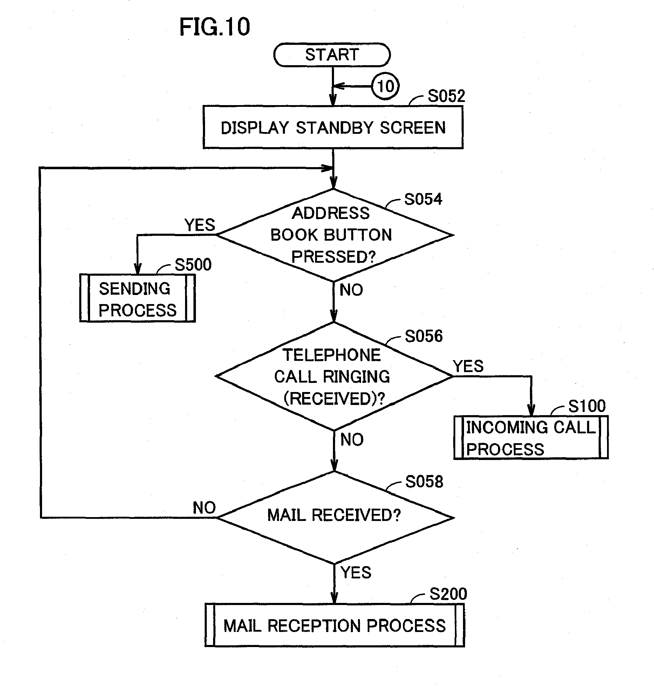

In the present embodiment, mobile phone 100 provides a communication process, as will be described hereinafter. Fig. 10 is a flow chart of a procedure of the communication process performed in mobile phone 100 according to the present embodiment.

As shown in Fig. 10, control unit 106 causes main display 107 to display a standby screen (Step S052). Control unit 106 determines whether address book button 110D has been operated (Step S054). If so (YES at Step S054), control unit 106 performs a sending process (Step S500). The sending process (Step S500) will be described later.

If address book button 110D is not operated (NO at Step S054), control unit 106 determines whether there is a telephone call ringing (Step S056). If so (YES at Step S056), control unit 106 performs an incoming call process (Step S100). The incoming call process (Step S100) will be described later.

If there is no telephone call ringing (NO at Step S056), control unit 106 determines whether mail has been received (Step S058). If so (YES at Step S058), control unit 106 performs a mail reception process (Step S200). The mail reception process (Step S200) will be described later.

### <Incoming Call Process in Mobile Phone 100>

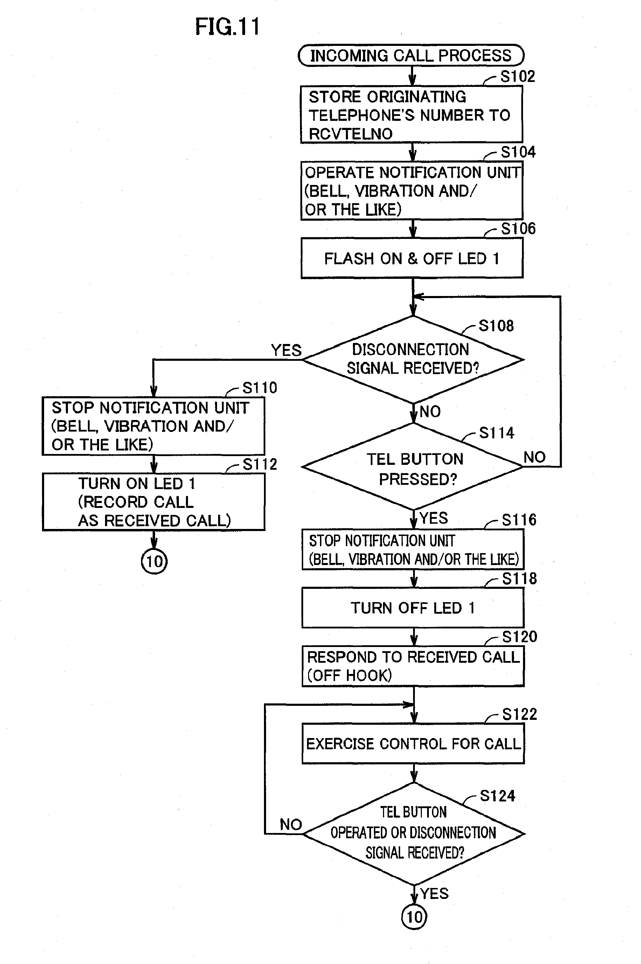

In the present embodiment, mobile phone 100 performs the incoming call process, as will be described hereinafter. Fig. 11 is a flow chart of a procedure of the incoming call process performed in mobile phone 100 according to the present embodiment.

As shown in Fig. 11, when there is a telephone call ringing (YES at Step S056), control unit 106 stores the originating telephone's number to RCVTELNO (Step S102). Control unit 106 operates first notification unit 111 (Step S104) and flashes on and off LED 112A for TEL (Step S106).

Control unit 106 determines whether a disconnection signal has been received (Step S 108). If so (YES at Step S 108), control unit 106 stops notification unit 111 (Step S110). Control unit 106 turns on LED 112A for TEL (Step S 112), and repeats Step S052 et seq.

If the disconnection signal is not received (NO at Step S108), control unit 106 determines whether TEL button 110A has been operated (Step S114). If not (NO at Step S 114), control unit 106 repeats Step S 108 et seq. If TEL button 110A has been operated (YES at Step S114), control unit 106 stops first notification unit 111 (Step S116), and turns off LED 112A for TEL (Step S118).

Control unit 106 shifts to a mode set for responding to a call, i.e., an on-hook mode (Step S120) to exercise control for the call (Step S122). Control unit 106 determines whether TEL button 110A has been operated and whether the disconnection signal has been received (Step S 124). If TEL button 110A has been operated or the disconnection signal has been received (YES at Step S124), control unit 106 ends the incoming call process and repeats Step S052 et seq. If neither TEL button 110A is operated nor the disconnection signal is received (NO at Step S124), control unit 106 repeats Step S122 et seq.

### <Mail Reception Process in Mobile Phone 100>

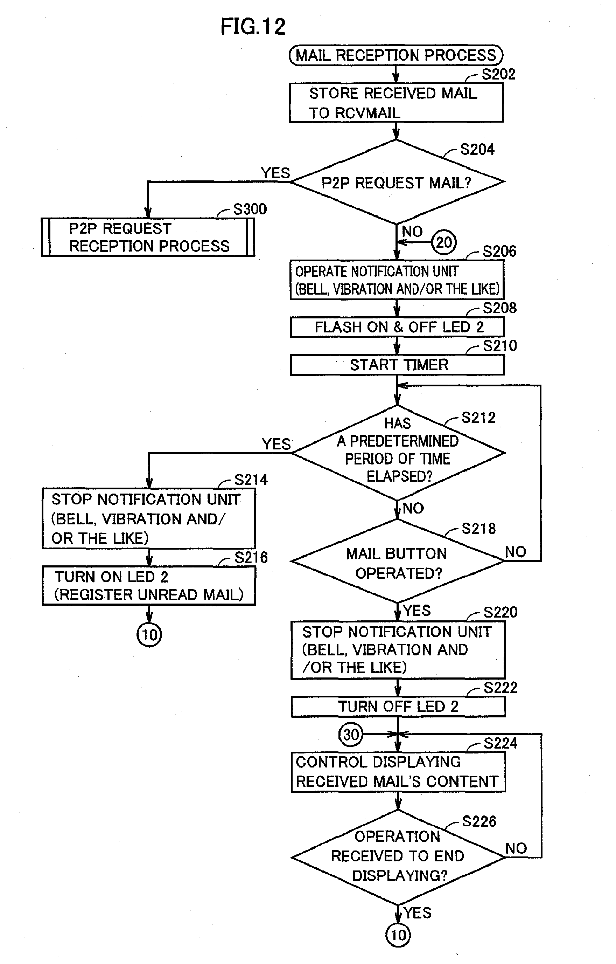

In the present embodiment, mobile phone 100 performs the mail reception process, as will be described hereinafter. Fig. 12 is a flow chart of a procedure of the mail reception process performed in mobile phone 100 according to the present embodiment.

As shown in Fig. 12, when mail is received (YES at Step S058), control unit 106 stores the received mail to RCVMAIL (Step S202). Control unit 106 determines whether the received mail is mail requesting P2P communication (Step S204). If so (YES at Step S204), control unit 106 performs a first P2P request reception process (Step S300). The first P2P request reception process (Step S300) will be described later.

When the received mail is not mail requesting P2P communication (NO at Step S204), control unit 106 operates first notification unit 111 (Step S206) and flashes on/off LED 112B for mail (Step S208). Control unit 106 causes a timer 105 to operate to count a period of time elapsing since the mail was received (Step S210). Control unit 106 determines whether the period of time having elapsed has reached a predetermined period of time, i.e., whether the predetermined period of time has elapsed since the mail was received (Step S212).

If so (YES at Step S212), control unit 106 stops first notification unit 111 (Step S214). Control unit 106 turns on LED 112B for mail (Step S216), and repeats Step S052 et seq.

If the period of time having elapsed does not reach the predetermined period of time (NO at Step S212), control unit 106 determines whether mail button 110B has been operated (Step S218). If so (YES at Step S218), control unit 106 stops first notification unit 111 (Step S220) and turns off LED 112B for mail (Step S222). Control unit 106 causes main display 107 to display the received mail's content(s) (Step S224).

Control unit 106 determines whether an operation indicating ending the displaying has been received (Step S226). If so (YES at Step S226), control unit 106 repeats Step S052 et seq. Otherwise (NO at Step S226), control unit 106 repeats Step S224 et seq.

### <First P2P Request Reception Process in Mobile Phone 100>

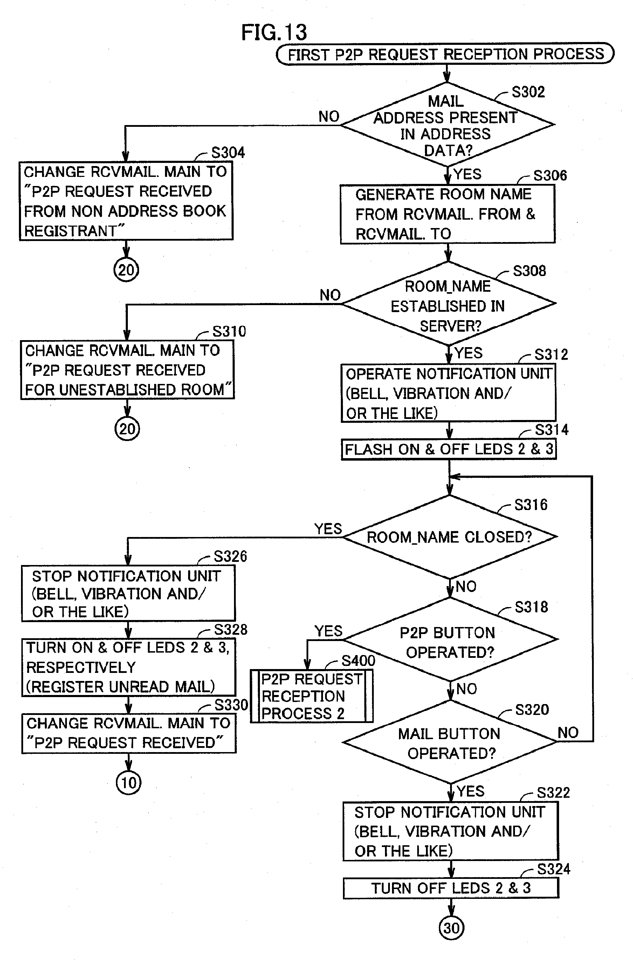

In the present embodiment, mobile phone 100 performs the first P2P request reception process, as will be described hereinafter. Fig. 13 is a flow chart of a procedure of the first P2P request reception process in mobile phone 100 according to the present embodiment.

As shown in Fig. 13, if P2P participation request mail is received (YES at Step S204), control unit 106 determines whether the mail's sender has an address included in address book data 103 (Step S302). If not (NO at Step S302), control unit 106 changes MAIN of RCVMAIL to data indicating that a P2P request has been received from a non address book registrant (Step S304). Control unit 106 repeats S206 et seq.

If the mail's sender has an address included in address book data 103 (YES at Step S302), control unit 106 generates a room name based on data stored in RCVMAIL at FROM and data stored in RCVMAIL at TO (Step S306). Control unit 106 stores the room name to ROOMNAME.

Control unit 106 determines whether a chat room having the room name stored in ROOMNAME has been generated in matching server 400 (Step S308). If not (NO at Step S308), control unit 106 changes MAIN of RCVMAIL to data indicating that a P2P request for an unestablished room has been received (Step S310). Control unit 106 repeats S206 et seq.

If the chat room with the room name has been generated (YES at Step S308), control unit 106 operates first notification unit 111 (Step S312) and flashes on/off LED 112B for mail and LED 112C for P2P (Step S314). Control unit 106 determines whether the chat room with the room name has been closed (Step S316). If so (YES at Step S316), control unit 106 stops first notification unit 111 (Step S326), turns on LED 112B for mail, and turns off LED 112C for P2P (Step S328). Control unit 106 changes MAIN of RCVMAIL to data indicating that a P2P request has been received (Step S330). Then control unit 106 repeats S052 et seq.

If the chat room with the room name is not closed, i.e., if the chat room with the room name exists in matching server 400 (NO at Step S316), control unit 106 waits an instruction received from the user operating the P2P button (Step S318). When an instruction to perform P2P communication is received via input unit 110, i.e., when the user inputs an instruction to enter a chat room (YES at Step S318), control unit 106 performs a second P2P request reception process (Step S400). The second P2P request reception process will be described later.

If the instruction to perform P2P communication is not received via input unit 110 (NO at Step S318), control unit 106 awaits the user operating the mail button (Step S320). If an instruction to display mail's content(s) is received via input unit 110 (YES at Step S320), control unit 106 stops first notification unit 111 (Step S322) and turns off LED 112B for mail and LED 112C for P2P (Step S324).

### <Second P2P Request Reception Process in Mobile Phone 100>

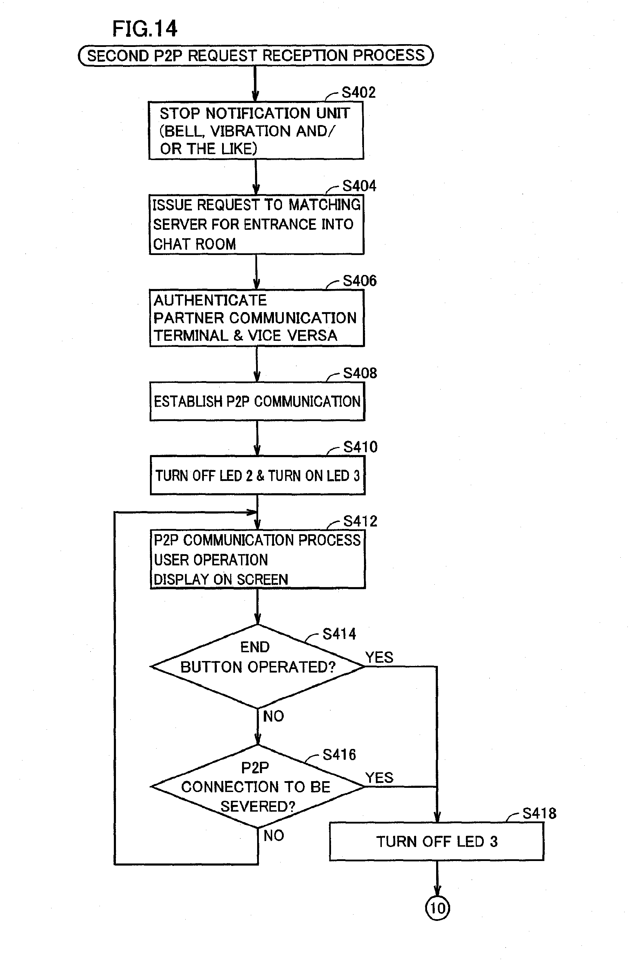

In the present embodiment, mobile phone 100 performs the second P2P request reception process, as will be described hereinafter. Fig. 14 is a flow chart of a procedure of the second P2P request reception process in mobile phone 100 according to the present embodiment.

As shown in Fig. 14, if an instruction to perform P2P communication is received via input unit 110 (YES at Step S318), control unit 106 stops first notification unit 111 (Step S402) and issues a request via communication unit 101 to matching server 400 for entrance into a chat room (Step S404). Control unit 106 authenticates a partner communication terminal via communication unit 101 and vice versa (Step S406) and establishes P2P communication (Step S408). Control unit 106 turns off LED 112B for mail and turns on LED 112C for P2P (Step S410).

Then control unit 106 performs a P2P communication process with the partner communication terminal via communication unit 101 (Step S412). In other words, control unit 106 receives an instruction input by the user via input unit 110 for an operation, causes communication unit 101 to transmit and receive a variety of types of data, and causes main display 107 to display a variety of types of information.

Control unit 106 determines whether end button 110E has been operated (Step S414). If so (YES at Step S414), control unit 106 turns off LED 112C for P2P (Step S418). Otherwise (NO at Step S414), control unit 106 determines whether an instruction has been received to sever P2P connection (Step S416). If so (YES at Step S416), control unit 106 turns off LED 112C for P2P. Otherwise (NO at Step S416), control unit 106 repeats Step S412 et seq.

### <Sending Process in Mobile Phone 100>

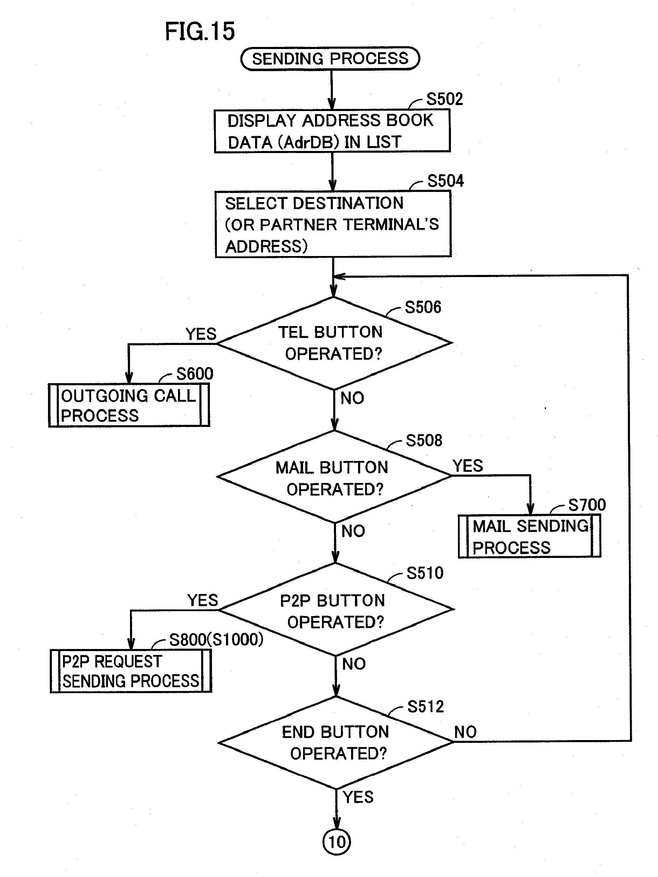

In the present embodiment, mobile phone 100 performs the sending process, as will be described hereinafter. Fig. 15 is a flow chart of a procedure of the sending process in mobile phone 100 according to the present embodiment.

When address book button 110D is operated (YES at Step S054), control unit 106 causes main display 107 to display an address book in a list based on address book data 103B, as shown in Fig. 15 (Step S502). The user selects a destination (or a partner communication terminal) via input unit 110. That is, control unit 106 receives an instruction via input unit 110 to select a partner communication terminal (Step S504).

With a partner communication terminal having been selected, control unit 106 determines whether TEL button 110A has been operated (Step S506). If so (YES at Step S506), control unit 106 performs an outgoing call process (Step S600). The outgoing call process (600) will be described later.

If TEL button 110A is not operated (NO at Step S506), control unit 106 determines whether mail button 110B has been operated (Step S508). If so (YES at Step S508), control unit 106 performs a mail sending process (Step S700). The mail sending process (Step S700) will be described later.

If the mail button is not operated (NO at Step S508), control unit 106 determines whether the P2P button has been operated (Step S510). If so (YES at Step S510), control unit 106 a P2P request sending process (Step S800) (Step S1000).

Otherwise (NO at Step S510), control unit 106 determines whether end button 110E has been operated (Step S512). If so (YES at Step S512), control unit 106 ends the sending process. Otherwise (NO at Step S512), control unit 106 repeats Step S506 et seq.

### <Outgoing Call Process in Mobile Phone 100>

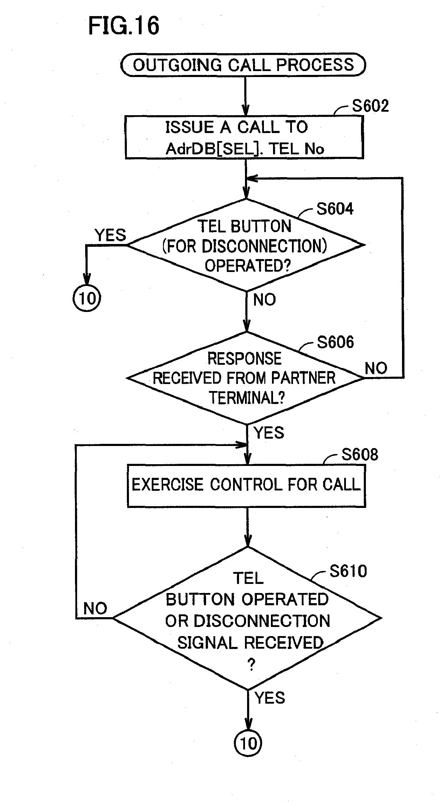

In the present embodiment, mobile phone 100 performs the outgoing call process, as will be described hereinafter. Fig. 16 is a flow chart of a procedure of the outgoing call process in mobile phone 100 according to the present embodiment.

As shown in Fig. 16, when TEL button 110A is operated (YES at Step S506), control unit 106 issues a call to a telephone number corresponding to a memory number stored in SEL (Step S602). That is, control unit 106 makes a call via communication unit 101 or communication unit 102 for TEL to a partner communication terminal corresponding to a selected address.

Control unit 106 determines whether TEL button 110A has been operated (Step S604). If so (YES at Step S604), control unit 106 repeats Step S052 et seq. Otherwise (NO at Step S604), control unit 106 awaits a response from the partner communication terminal (Step S606). If there is no response from the partner communication terminal (NO at Step S606), control unit 106 repeats Step S604 et seq.

If there is a response from the partner communication terminal (YES at Step S606), control unit 106 exercises control for the call (Step S608). If TEL button 110A has been operated or a disconnection signal has been received (YES at Step S610), control unit 106 ends the incoming call process and repeats Step S052 et seq. If neither TEL button 110A is operated nor a disconnection signal is received (NO at Step S610), control unit 106 repeats Step S608 et seq.

### <Mail Sending Process in Mobile Phone 100>

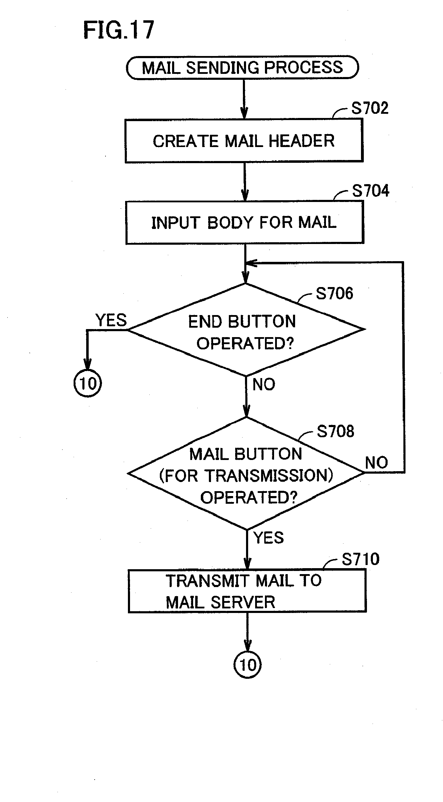

In the present embodiment, mobile phone 100 performs the mail sending process, as will be described hereinafter. Fig. 17 is a flow chart of a procedure of the mail sending process in mobile phone 100 according to the present embodiment.

As shown in Fig. 17, when mail button 110B is operated (YES at Step S508), control unit 106 creates a mail header (Step S702). The user inputs a body for mail via input unit 110. That is, control unit 106 receives the mail's body from the user via input unit 110 (Step S704).

Control unit 106 determines whether end button 110E has been operated (Step S706). If so (YES at Step S706), control unit 106 repeats Step S052 et seq.
Otherwise (NO at Step S706), control unit 106 determines whether mail button 110B has been operated (Step S708).

If so (YES at Step S708), control unit 106 transmits the mail to mail server 600 via communication unit 101 (Step S710). Otherwise (NO at Step S708), control unit 106 repeats Step S706 et seq.

### <P2P Request Sending Process in Mobile Phone 100>

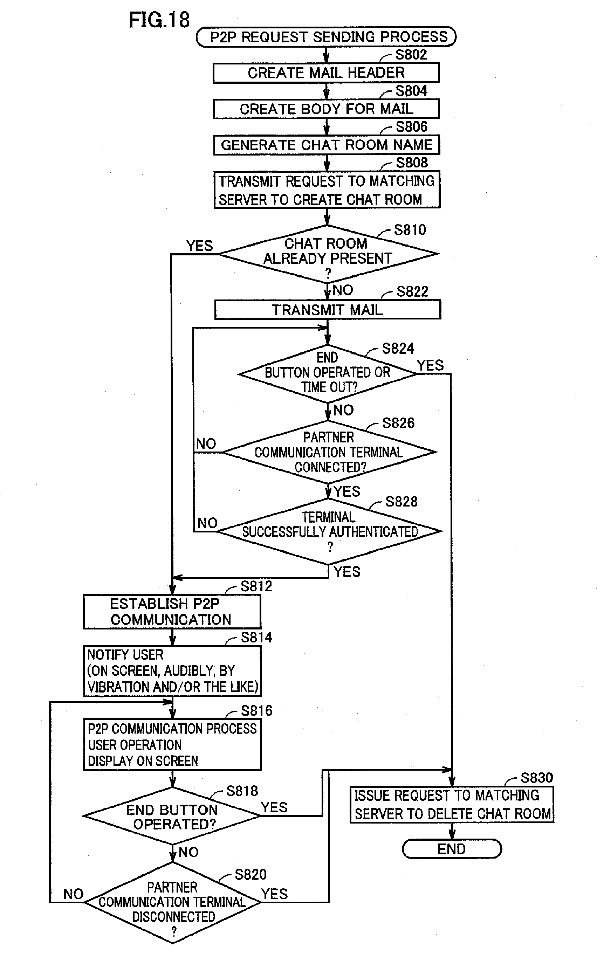

In the present embodiment, mobile phone 100 performs the P2P request sending process, as will be described hereinafter. Fig. 18 is a flow chart of a procedure of the P2P request sending process in mobile phone 100 according to the present embodiment.

As shown in Fig. 18, when P2P button 110C is operated (YES at Step S510), control unit 106 creates a mail header (Step S802) and creates a body for mail (Step S804). Control unit 106 refers to its own terminal's data 103C and address book data 103B to create a room name based on its own terminal's mail address and a partner communication terminal's mail address (Step S806).

Control unit 106 transmits a request to matching server 400 via communication unit 101 to create a chat room (Step S808). Control unit 106 receives a response from matching server 400 and determines therefrom whether the chat room already exists in matching server 400 (Step S810).

If so (YES at Step S810), control unit 106 establishes P2P communication via communication unit 101 (Step S812). Control unit 106 notifies the user via first notification unit 111, main display 107, and/or the like that P2P communication has been established (Step S814). Control unit 106 performs the P2P communication process with the partner communication terminal via communication unit 101 (Step S816). In other words, control unit 106 receives an instruction input by the user via input unit 110 for an operation, causes communication unit 101 to transmit and receive a variety of types of data, and causes main display 107 to display a variety of types of information.

Control unit 106 determines whether end button 110E has been operated (Step S818). If so (YES at Step S818), control unit 106 transmits a request to matching server 400 via communication unit 101 to delete the chat room (Step S830). Otherwise (NO at Step S818), control unit 106 determines whether the partner communication terminal has severed P2P connection (Step S820). If so (YES at Step S820), control unit 106 transmits a request to matching server 400 via communication unit 101 to delete the chat room (Step S830). Otherwise (NO at Step S820), control unit 106 repeats Step S816 et seq.

If at Step S810 the chat room still does not exist in matching server 400 (NO at Step S810), control unit 106 transmits mail to the partner communication terminal to invite it to P2P (Step S822). Control unit 106 determines whether end button 110E has been operated or whether a predetermined period of time has elapsed since the mail was transmitted (Step S824). If end button 110E has been operated or if the predetermined period of time has elapsed since the mail was transmitted (YES at Step S824), control unit 106 transmits a request via communication unit 101 to matching server 400 to delete the chat room (Step S830).

If neither end button 110E is operated nor the predetermined period of time has elapsed since the mail was transmitted (NO at Step S824), control unit 106 determines whether the partner communication terminal has connected via communication unit 101, i.e., whether the partner communication terminal has entered the chat room (Step S826). If so (YES at Step S826), control unit 106 authenticates the partner communication terminal via communication unit 101 (Step S828).

Otherwise (NO at Step S826), or if control unit 106 has failed in authenticating the partner communication terminal via communication unit 101 (NO at Step S828), control unit 106 repeats Step S824 et seq. If control unit 106 has succeeded in authenticating the partner communication terminal via communication unit 101 (YES at Step S828), control unit 106 repeats Step S812 et seq.

### <Room Generation Process in Matching Server 400>

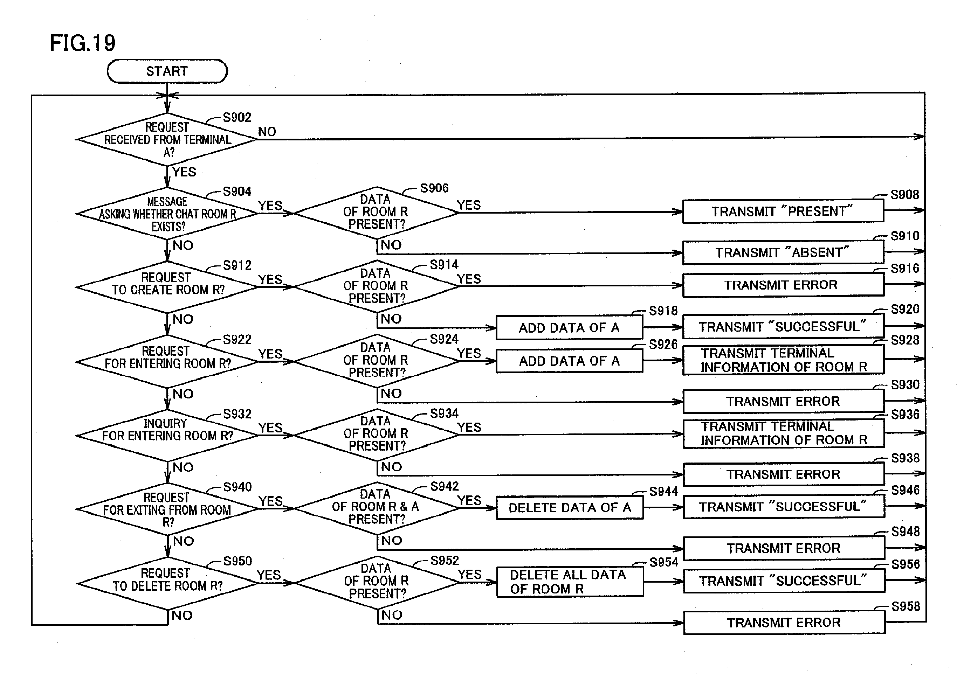

In the present embodiment, matching server 400 performs a room generation process, as will be described hereinafter. Fig. 19 is a flow chart of a procedure of the room generation process in matching server 400 according to the present embodiment.

As shown in Figs. 2 and 19, the matching server 400 CPU 405 awaits a message from first mobile phone 100A via server communication unit 409 (Step S902). When a message is received from first mobile phone 100A (YES at Step S902), CPU 405 determines whether the message is a message asking whether a chat room exists (Step S904).

If so (YES at Step S904), CPU 405 extracts the room name R from the message or generates the room name R from the message, and determines whether a chat room with the room name R already exists (Step S906). That is, CPU 405 determines whether room management table 406A includes data of the room name R.

If so (YES at Step S906), CPU 405 transmits to first mobile phone 100A a message indicating that there exists a chat room with the room name R (Step S908), and CPU 405 repeats Step S902 et seq. Otherwise (NO at Step S906), CPU 405 transmits to first mobile phone 100A a message indicating that there does not exist a chat room with the room name R (Step S910), and CPU 405 repeats Step S902 et seq.

If the message is not a message asking whether a chat room exists (NO at Step S904), CPU 405 determines whether the message is a request to generate a chat room (Step S912). If so (YES at Step S912), CPU 405 extracts the room name R from the message. Alternatively, CPU 405 generates a room name based on the mail address of first mobile phone 100A and the mail address of second mobile phone 100B, and CPU 405 determines whether a chat room with the room name R already exists (Step S914). That is, CPU 405 determines whether room management table 406A includes data of the room name R.

If so (YES at Step S914), CPU 405 transmits to first mobile phone 100A a message (an error message) indicating that a chat room with the room name R exists (Step S916), and CPU 405 repeats Step S902 et seq. Otherwise (NO at Step S914), CPU 405 associates the room name R with the IP or mail address of first mobile phone 100A and thus stores them in room management table 406A (Step S918). Then CPU 405 transmits to first mobile phone 100A via server communication unit 409 a message indicating that a chat room with the room name R has successfully been generated (and the generated chat room's room name) (Step S920), and CPU 405 repeats Step S902 et seq.

If the message is not a request to generate a chat room (NO at Step S912), CPU 405 determines whether the message from first mobile phone 100A is a request for entering a chat room (Step S922). If so (YES at Step S922), CPU 405 extracts the room name R from the message and determines whether a chat room with the room name R already exists (Step S924). That is, CPU 405 determines whether room management table 406A includes data of the room name R.

If so (YES at Step S924), CPU 405 associates the room name R with the IP or mail address of second mobile phone 100B and thus stores them in room management table 406A (Step S926). Then CPU 405 transmits information on the chat room with the room name R to second mobile phone 100B via server communication unit 409 (Step S928).

If there is not data of the room name R (NO at Step S924), CPU 405 transmits to second mobile phone 100A a message (an error message) indicating that a chat room with the room name R does not exist (Step S930), and CPU 405 repeats Step S902 et seq.

If the message is not a request for entering a chat room (NO at Step S922), CPU 405 determines whether the received message is an inquiry for entering a chat room (Step S932). If so (YES at Step S932), CPU 405 extracts the room name R from the message and determines whether a chat room with the room name R already exists (Step S934). That is, CPU 405 determines whether room management table 406A includes data of the room name R.

If so (YES at Step S934), CPU 405 transmits information on the chat room with the room name R to second mobile phone 100B via server communication unit 409 (Step S936). Otherwise (NO at Step S934), CPU 405 transmits to second mobile phone 100B a message (an error message) indicating that a chat room with the room name R does not exist (Step S938), and CPU 405 repeats Step S902 et seq.

If the message is not an inquiry for entering a chat room (NO at Step S932), CPU 405 determines whether the received message is a request for exiting from a chat room (Step S940). If so (YES at Step S940), CPU 405 extracts the room name R from the message and refers to room management table 406A to determine whether the message's sender is a mobile phone having an IP address stored in association with the room name R (Step S942).

If so (YES at Step S942), CPU 405 deletes from room management table 406A a record of the room name R and the IP address of the mobile phone that is the sender of the message (Step S944). Then CPU 405 transmits via server communication unit 409 to the sender of the message a message indicating that it has successfully exited from the chat room (Step S946).

If the message's sender is not a mobile phone having an IP address stored in association with the room name R (NO at Step S942), CPU 405 transmits an error message to the sender of the message (Step S948) and repeats Step S902 et seq.

If the message is not a request for exiting from a chat room (NO at Step S940), CPU 405 determines whether the received message is a request to delete a chat room (Step S950). If so (YES at Step S950), CPU 405 extracts the room name R from the message and determines whether a chat room with the room name R already exists (Step S952). That is, CPU 405 determines whether room management table 406A includes data of the room name R.

If so (YES at Step S952), CPU 405 deletes information on the chat room with the room name R from room management table 406A (Step S954). Then CPU 405 transmits via server communication unit 409 to the sender of the message a message indicating that the chat room has successfully been deleted (Step S956), and CPU 405 repeats Step S902 et seq. If there is not data of the room name R (NO at Step S952), CPU 405 transmits to second mobile phone 100B a message (an error message) indicating that a chat room with the room name R does not exist (Step S958), and CPU 405 repeats Step S902 et seq.

### <Variation of P2P Request Sending Process in Mobile Phone 100>

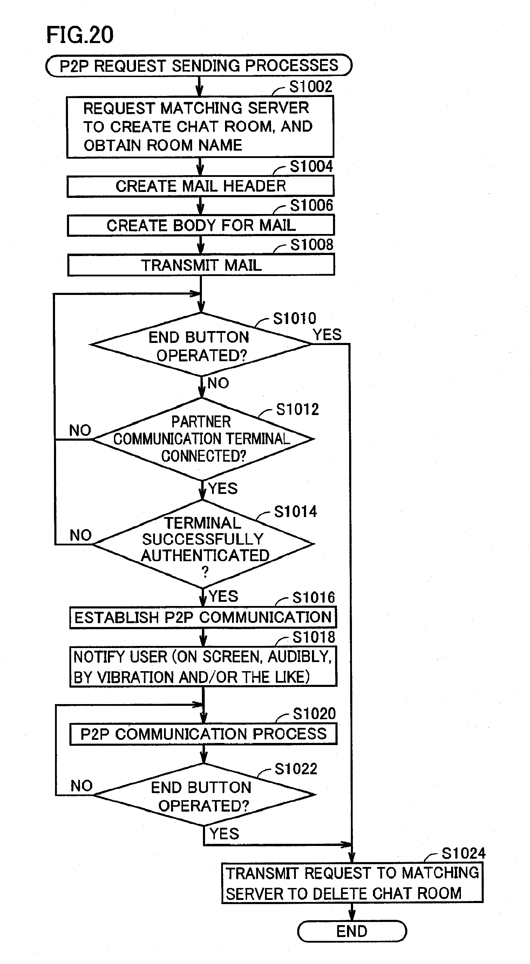

In the present embodiment, mobile phone 100 performs a variation of the P2P request sending process, as will be described hereinafter. Fig. 20 is a flow chart of a procedure of the P2P request sending process in mobile phone 100 according to the present embodiment in the variation.

For the sake of illustration, matching server 400 generates a room name and first mobile phone 100A receives the room name. As shown in Fig. 20, when P2P button 110C is operated (YES at Step S510), control unit 106 requests matching server 400 via communication unit 101 to generate a chat room (Step S1002). At the time, CPU 405 receives a room name via communication unit 101.

Control unit 106 creates a mail header (Step S1004) and creates a body for mail (Step S1006). Control unit 106 transmits mail via communication unit 101 to a partner communication terminal to invite it to P2P (Step S1008).

Control unit 106 determines whether the end button has been operated (Step S1010). If so (YES at Step S1010), control unit 106 transmits a request to matching server 400 via communication unit 101 to delete a chat room (Step S1024).

If the end button is not operated (NO at Step S1010), control unit 106 determines whether the partner communication terminal has connected via communication unit 101, i.e., whether the partner communication terminal has entered the chat room (Step S1012). If so (YES at Step S1012), control unit 106 authenticates the partner communication terminal via communication unit 101 (Step S1014).

Otherwise (NO at Step S1012), or if control unit 106 has failed in authenticating the partner communication terminal via communication unit 101 (NO at Step S1014), control unit 106 repeats Step S1010 et seq.

If control unit 106 has succeeded in authenticating the partner communication terminal via communication unit 101 (YES at Step S1014), control unit 106 establishes P2P communication via communication unit 101 (Step S1016). Control unit 106 notifies the user via first notification unit 111, main display 107, and/or the like that P2P communication has been established (Step S1018). Control unit 106 performs the P2P communication process with the partner communication terminal via communication unit 101 (Step S1020). In other words, control unit 106 receives an instruction input by the user via input unit 110 for an operation, causes communication unit 101 to transmit and receive a variety of types of data, and causes main display 107 to display a variety of types of information.

Control unit 106 determines whether end button 110E has been operated (Step S1022). If so (YES at Step S1022), control unit 106 transmits a request to matching server 400 via communication unit 101 to delete the chat room (Step S1024).
Otherwise (NO at Step S1022), control unit 106 repeats Step S1020 et seq.

It is needless to say that the present invention is also applicable to a case achieved by providing a system or a device with a program. The present invention's effect can also be exploited in such a manner that a storage medium having stored therein a program represented by software for achieving the present invention is provided to a system or a device and a computer (or CPU or MPU) of the system or device reads and executes a program code stored in the storage medium.

In that case, the program code per se read from the storage medium will implement the function of the above described embodiment, and the storage medium having the program code stored therein will configure the present invention.

The storage medium for providing the program code can for example be a hard disc, an optical disc, a magneto-optical disc, a CD-ROM, a CD-R, a magnetic tape, a non-volatile memory card (an IC memory card), ROMs (mask ROM, flash EEPROM, or the like), or the like.

Furthermore, it is needless to say that not only can the program code read by the computer be executed to implement the function of the above described embodiment, but a case is also included in which in accordance with the program code's instruction an operating system (OS) running on the computer performs an actual process partially or entirely and that process implements the function of the above described embodiment.

Furthermore, it is also needless to say that a case is also included in which the program code read from the storage medium is written to memory included in a feature expansion board inserted in a computer or a feature expansion unit connected to the computer, and subsequently, in accordance with the program code's instruction, a CPU included in the feature expansion board or the feature expansion unit performs an actual process partially or entirely and that process implements the function of the above described embodiment.

It should be understood that the embodiments disclosed herein are illustrative and non-restrictive in any respect. The scope of the present invention is defined by the terms of the claims, rather than the description above, and is intended to include any modifications within the scope and meaning equivalent to the terms of the claims.

### DESCRIPTION OF THE REFERENCE SIGNS

1: network system, 100, 100A, 100B, 100C: mobile phone, 101, 101-1, 101-2: communication unit, 103, 103-1, 103-2: storage unit, 103A, 103A-1, 103A-2: working memory, 103B, 103B-1, 103B-2: address book data, 103C, 103C-1, 103C-2: own terminal's data, 103D, 103D-1, 103D-2: IP address data, 106, 106-1, 106-2: control unit, 106A, 106A-1, 106A-2: generation unit, 107: main display, 108: microphone, 109: speaker, 110, 110-1, 110-2: input unit, 200: car navigation device, 300: personal computer, 400: matching server, 405A: room generation unit, 405B: reception unit, 406: memory, 406A: room management table, 407: fixed disk, 408: internal bus, 409: server communication unit, 500: Internet network, 600: mail server, 700: carrier network.

## Claims

1. A network system comprising first and second communication terminals (100A, 100B) and a server device (400), said first communication terminal including
a first storage unit (103-1) for storing first and second identification information for identifying said first and second communication terminals, respectively,
a first generation unit (106A-1) for generating a room name based on said first and second identification information, and
a first communication unit (101-1) for transmitting to said server device a request to generate a room for communicating data, and said room name, said first communication unit transmitting information indicating an invitation to said room and said first identification information to said second communication terminal via a network in accordance with said second identification information, said first communication unit accessing said room corresponding to said room name, said server device including
a server communication unit (409) for receiving said request and said room name from said first communication terminal,
a room generation unit (405A) operative, in response to said request, for generating said room having said room name, and
a reception unit (405B) for receiving an access to said room from said first and second communication terminals, said second communication terminal including
a second storage unit (103-2) for storing said second identification information, a second generation unit (106A-2) for generating said room name based on said first and second identification information, and
a second communication unit (101-2) for receiving said information from said first communication terminal, and for accessing said room corresponding to said room name.

2. A communication terminal connectable to another communication terminal and a server device on a network, comprising:
a storage unit for storing first and second identification information for identifying the communication terminal and said other communication terminal, respectively;
a generation unit for generating a room name based on said first and second identification information; and
a communication unit for transmitting to said server device a request to generate a room for communicating data, and said room name, said communication unit transmitting information indicating an invitation to said room and said first identification information to said other communication terminal via said network in accordance with said second identification information, said communication unit accessing said room corresponding to said room name.

3. A communication terminal connectable to another communication terminal and a server device on a network, comprising:
a storage unit for storing first identification information for identifying the communication terminal;
a communication unit for receiving from said other communication terminal information indicating an invitation to a room for communicating data and second identification information for identifying said other communication terminal; and
a generation unit operative in response to said information for generating said room name based on said first and second identification information, said communication unit accessing said room corresponding to said room name.

4. The communication terminal according to claim 3, said storage unit storing a plurality of items of identification information for identifying other communication terminals, respectively, the communication terminal further comprising a notification unit operative in accordance with a decision on whether said second identification information received from said communication unit is stored in said storage unit, for notifying a user that said invitation to said room has been received, wherein said communication unit operates, in response to an operation done by the user corresponding to said notification unit, to access said room corresponding to said room name.

5. A communication method in a communication terminal connectable to another communication terminal and a server device on a network, said communication terminal including a control unit, a communication unit, and a storage unit for storing first and second identification information for identifying said communication terminal and said other communication terminal, respectively, the method comprising the steps of:
said control unit generating a room name based on said first and second identification information;
said control unit transmitting via said communication unit to said server device a request to generate a room for communicating data, and said room name;
said control unit transmitting via said communication unit to said other communication terminal in accordance with said second identification information information indicating an invitation to said room and said first identification information; and
said control unit accessing via said communication unit said room corresponding to said room name.

6. A communication method in a communication terminal connectable to another communication terminal and a server device on a network, said communication terminal including a control unit, a communication unit, and a storage unit for storing first identification information for identifying said communication terminal, the method comprising the steps of:
said control unit receiving from said other communication terminal via said communication unit information indicating an invitation to a room for communicating data and second identification information for identifying said other communication terminal;
said control unit operating, in response to said information, to generate a room name based on said first and second identification information; and
said control unit accessing via said communication unit said room corresponding to said room name.

7. A communication program for causing a communication terminal connectable to another communication terminal and a server device on a network to communicate, said communication terminal including a control unit, a communication unit, and a storage unit for storing first and second identification information for identifying said communication terminal and said other communication terminal, respectively, the communication program causing said control unit to perform the steps of:
generating a room name based on said first and second identification information;
transmitting via said communication unit to said server device a request to generate a room for communicating data, and said room name;
transmitting via said communication unit to said other communication terminal, in accordance with said second identification information, information indicating an invitation to said room and said first identification information; and
accessing via said communication unit said room corresponding to said room name.

8. A communication program for causing a communication terminal connectable to another communication terminal and a server device on a network to communicate, said communication terminal including a control unit, a communication unit, and a storage unit for storing first identification information for identifying said communication terminal, the communication program causing said control unit to perform the steps of:
receiving from said other communication terminal via said communication unit information indicating an invitation to a room for communicating data and second identification information for identifying said other communication terminal;
operating in response to said information to generate said room name based on said first and second identification information; and
accessing via said communication unit said room corresponding to said room name.
